# EUROPÄISCHE PATENTSCHRIFT

(11) **EP 2 787 243 B1**
(45) Veröffentlichungstag und Bekanntmachung des Hinweises auf die Patenterteilung: **28.09.2016**
(21) Anmeldenummer: 14150530.5
(22) Anmeldetag: 09.01.2014
(51) Int. Cl.: F16G 1/28, F16G 5/20

(54) **Keilrippenriemen**
V-ribbed belt
Courroie trapézoïdale à nervures

(30) Priorität: 05.03.2013 DE 102013102139
(43) Veröffentlichungstag der Anmeldung: 08.10.2014
(73) Patentinhaber: ContiTech Antriebssysteme GmbH, 30165 Hannover (DE)
(72) Erfinder: Moses, Reinhold, 37632 Eimen (DE); Kanzow, Henning, 30419 Hannover (DE); Finzelberg, Jan, 30159 Hannover (DE); Schulte, Hermann, 30823 Garbsen (DE)
(74) Vertreter: Kilsch, Armin Ralph

(56) Entgegenhaltungen:
- EP-A1- 0 106 694
- DE-A1-102010 015 901
- FR-A1- 2 796 692
- US-A- 4 904 232
- US-A1- 2010 004 084

## Beschreibung

Die Erfindung betrifft einen kraftübertragenden Keilrippenriemen aus Elastomermaterial mit eingebetteten Zugträgern, dessen Rippenprofil im Wesentlichen als symmetrisches Trapez ausgebildet ist.

Kraftübertragende, endlose Keilrippenriemen (KRR) werden mit unterschiedlichen Profilen hergestellt, sind in einer Vielzahl von Ausführungen bekannt und werden in ihren wesentlichen Ausbildungen und Maßen u.a. in der DIN 7867 normiert. Nach dortiger Beschreibung sind Keilrippenriemen für Kraftfahrzeuge normalerweise mit einem Profil der Bezeichnung "PK" ausgestattet. In der DIN 7867 sind für das PK-Profil eine Riemenhöhe von ca. 6mm und der im Kopfprofil vorhandene Radius mit mindestens 0,5 mm angegeben. Es ist in den Maßangaben sorgfältig darauf zu achten, ob es sich um solche für Riemen oder für Riemenscheiben handelt, die ebenfalls in der DIN 7867 beschrieben werden.

Der Rippenkopf kann, wie ebendort beschrieben, entweder in Form einer "abgerundeten Spitze", d.h. mit einem abgerundeten Kopfprofil ausgebildet sein, oder aber eine Abflachung mit Kanten aufweisen. Bei abgerundeter Spitze wird ein Kopfradius von 0,5 mm empfohlen, während die Abflachung des Rippenkopfes, bei der üblicherweise eine scharfe Rippenkante entsteht, nach Wahl des Herstellers erfolgen kann.

Einen Riemen mit abgerundeten Kopfprofil zeigt z.B. die US 2005/0090350 A1, die einen als Keilrippenriemen ausgebildeten Antriebsriemen offenbart, der V-förmige Rippen mit abgerundeten Spitzen aufweist. Der Radius der der Rundungen des Kopfprofils beträgt 1,0 bis 1,5 mm und fällt somit aus der DIN deutlich heraus. Verwendet man allerdings dieses Profil in Verbindung mit nicht profilierten Umlenkrollen auf der Rippenseite der Riemen, so kann es zu einem starken Verschleiß dieser Rollen und/oder der Rippenköpfe kommen, erfahrungsgemäß insbesondere dann, wenn der Riemen eine Rippenbeschichtung aufweist, die Polyamid, Polyester oder Aramid enthält.

Die DE 100 16 351 A1 offenbart einen als Keilrippenriemen ausgebildeten reibschlüssigen Treibriemen, bei dem zur Geräuschverminderung mindestens eine Teile der Oberfläche der Keilrippen mit einem Beflockungsmaterial aus kurzen Aramidfasern versehen ist, wobei ein Teil der Aramidfasern nur mit einer Teillänge jeder einzelnen Faser in die Oberfläche eingebunden ist. Die hier figürlich dargestellten Ausführungsbeispiele zeigen allesamt Profile, die eine Abflachung mit Kanten, evtl. auch mit gebrochenen oder abgerundeten Kanten aufweisen, aber nicht weiter spezifiziert sind.

Eine ähnliche Konstruktion zeigt die DE 10 2010 015 901 A1. Der dort offenbarte Gegenstand betrifft einen Keilrippenriemen, bei dem die Oberfläche der Keilrippen mit einer Gewebeauflage versehen ist, die aus Kettfäden und Schussfäden gebildet ist. Dabei verlaufen die Kettfäden in Riemenlängsrichtung und die Schussfäden in Riemenquerrichtung. Die Kettfäden und Schussfäden sind dehnbar, wobei die Dehnbarkeit der Schussfäden größer ist als die der Kettfäden. Außerdem sind Kettfäden und Schussfäden texturiert.

Keilrippenriemen erzeugen oft Laufgeräusche. Letztere entstehen entweder durch Schiefstellungen von Rollen im Riementrieb oder aber bei Keilrippenriemen mit hohen Reibbeiwerten beim Start der Riementriebe oder bei höheren Temperaturen der Bauteile. Dabei lässt sich auch durch sogenannte "entkoppelte" Riemenscheiben, welche mit einer Gummispur versehen sind, die Geräuschbildung nur unzureichend reduzieren.

Man gerät damit in eine Art Zielkonflikt. Reduziert man den Reibbeiwert des Keilrippenriemens durch Beschichtungen, so vermindert man zwar das Geräuschniveau insbesondere beim Startvorgang, aber auch gleichzeitig die übertragbare Umfangskraft/Antriebsmoment. Zudem entsteht bei niedrigem Reibbeiwert Schlupf, der zur Temperaturerhöhung führt. Bei höheren Trieb-/Riementemperaturen beobachtet man dann wieder einen schnelleren Verschleiß der Beschichtungen, womit die alten Probleme zurückkehren.

Die Profilform als solche hat natürlich auch einen erheblichen Einfluss auf die Geräuschbildung. Das in der DE 100 16 351 A1 offenbarte Trapezprofil eignet sich zur Geräuschreduzierung insbesondere dann, wenn es zusätzlich mit einer oder mehreren Beschichtung versehen ist, wie sie hier beispielsweise durch die gezeigte Beflockung aus Aramidfasern und einer zusätzlichen Sprühbeschichtung aus einem Gemisch aus Polyurethan mit Teflon besteht.

Allerdings ist diese Beschichtung ist sehr aufwendig und teuer. Außerdem sie verschleißt im Betrieb relativ schnell, insbesondere bei modernen Motoren, die über eine Start-Stopp-Automatik verfügen. Durch den Verschleiß steigt der Reibbeiwert des Riemens nach wenigen tausend Kilometern wieder an, so dass die unerwünschten Startgeräusche zurückkehren.

Einen besseren Verschleißschutz und damit ein gutes Startgeräuschverhalten bietet eine Beschichtung, wie sie in der DE 10 2010015 901A1 beschrieben ist. Die dort gezeigte, aus einem geschlossenen, längs- und querelastischen Gewebe bestehende Beschichtung, erzeugt einen sehr niedrigen Reibbeiwert für den Keilrippenriemen. Dadurch kann aber ein zu hoher Schlupf entstehen, womit sich merkliche Leistungsverluste einstellen. Zum Einen reduziert dies die Motoreffizienz und zum Anderen führt der Schlupf, also ein "rutschender" Riemen, zu einer übermäßigen Erwärmung im Betrieb. Dies wiederum reduziert wieder die Lebensdauer des Riemens.

Für die Erfindung bestand also die Aufgabe, einen Keilrippenriemen bereitzustellen, der geräuscharm auch unter den Belastungen einer Start-Stopp-Automatik im Kraftfahrzeug läuft, der ein ausreichend hohes Drehmoment mit nur geringem Schlupf übertragen kann und der keinen nennenswerten Verschleiß erzeugt, wenn nicht profilierte Rollen zur Umlenkung des Riemens verwendet werden. Mit "geringem Schlupf" sind Schlupfwerte von < 3% an der unter Volllast belasteten Generatorscheibe bei Leerlaufdrehzahl gemeint.

Gelöst wird diese Aufgabe durch die Merkmale des Hauptanspruchs. Weitere vorteilhafte Ausbildungen sind in den Unteransprüchen offenbart.

Dabei ist das im Wesentlichen als symmetrisches Trapez mit einer langen Trapezgrundseite und einer kürzeren Trapezkopfseite ausgebildete Rippenprofil mit an seiner Kopfseite zum Trapez hin gebogenen Schenkeln versehen, wobei der Radius der Biegung größer ist als 0,8 mm und die Breite der Trapezkopfseite (Plateaubreite) zwischen 0,7 und 1,5 mm liegt.

Überraschenderweise ist mit einem solchen Profil ein nahezu geräuschfreier Betrieb eines Keilrippenriemens in einer Start-Stopp-Automatik auch bei den Startvorgängen möglich, obwohl der Riemen aufgrund seiner Rippenbeschichtung einen mittleren Reibbeiwert aufweist. Als mittlerer Reibbeiwert ist hier ein Reibbeiwert nach der SAE J2432 gemeint von etwa 1,2 bis 1,5.

Die so abgeflachte Trapezkopfseite kann darüber hinaus völlig problemlos über nicht profilierte Umlenkrollen geführt werden, ohne besondere Verschleißerscheinungen zu erzeugen.

Eine vorteilhafte Weiterbildung besteht darin, dass die Differenz der Breite der Trapezkopfseite ohne Abrundung zur Breite der Trapezkopfseite mit Abrundung (Plateaubreite) mindestens 0,6 mm beträgt. Dadurch erreicht man, dass nach einem gelingen Abrieb der Riemenflanken, insbesondere hervorgerufen durch Scheibenschiefstellungen, die Trapezköpfe immer noch eine gewisse Abrundung aufweisen, wodurch das positive Geräuschverhalten des Riemens erhalten bleibt.

Eine vorteilhafte Weiterbildung besteht darin, dass der Radius der Biegung mindestens 1,0 mm beträgt. Versuche haben ergeben, dass das Geräuschverhalten beim Startvorgang insbesondere bei warmen Motoren sich verbesserte, wenn Riemen einen möglichst großen Radius in der Biegung aufwiesen.

Eine weitere vorteilhafte Ausbildung besteht darin, dass der Reibbeiwert, gemessen als der relativer Reibungsbeiwert (Coefficient of Friction = CoF) nach SAE J2432, zwischen 1,2 und 1,5 liegt, d.h. 1,2 < CoF < 1,5 . Ein solcher Reibbeiwert ist ausreichend geeignet für die Übertragung hoher Umfangskräfte, lässt sich durch die chemische Zusammensetzung der Rippenoberfläche und das Herstellverfahren der Riemen leicht einstellen und führt dazu, dass ein Keilrippenriemen mit den erfindungsgemäßen Profilausbildungen gleichzeitig äußerst geräuscharm und ohne übermäßigem Schlupf läuft.

Eine weitere vorteilhafte Ausbildung besteht darin, dass die Profilrippen mit einer Beschichtung in Form einer Textilauflage versehen sind, die Fasern aus Polyamid, Aramid oder Polyester enthält. Damit lassen sich weitere Anpassungen für besondere Einsatzfälle auslegen, beispielsweise für Antriebe von Kompressoren oder Hydraulikaggregaten, die leise und ruckfrei ohne Reibungsschwankungen laufen sollen. Gleiche Vorteile ergeben sich dann, wenn man als Textilauflage ein Baumwoll-Mischgestrick mit Fasern aus Polyamid, Aramid oder Polyester verwendet.

Eine weitere vorteilhafte Ausbildung besteht darin, dass die Kautschukmischung unter der Beschichtung peroxidisch vernetzt wurde. Peroxidisch vernetzte Kautschukmischungen weisen eine bessere Wärmebeständigkeit auf als mit Schwefel vernetzte Kautschukmischungen.

Eine weitere vorteilhafte Ausbildung besteht darin, dass der Unterbau Ethylen-Propylen-Dien-Kautschuk, Ethylen-Propylen-Kautschuk, hydrierter Acrylnitril-Kautschuk oder Gemische daraus enthält. Diese Kautschuktypen zeichnen sich durch besonders hohe Wärmebeständigkeiten und gute Abriebbeständigkeiten aus.

Hierzu wurden auch Versuche durchgeführt, bei denen Keilrippenriemen mit verschiedenen Rippenbeschichtungen auf einem von einem Dieselmotor angetriebenen einfachen, nicht entkoppelten Riementrieb 44 Stunden im Leerlauf gealtert wurden. Die Riemen wurden vorher und nachher bezüglich ihres relativen Reibungsbeiwerts nach SAE J2432 auf CoF vermessen und in Bezug auf die Geräuschentwicklung mit Hilfe eines weiteren Dieselmotors mit entkoppelter Kurbelwellenscheibe bewertet. Die Start-Stopp-Geräusche (jeweils 10 Starts und Stopps) wurden nach einer Einlaufphase mit einer Drehzahl 3000 U/min bei einer Riementemperatur von 70°C aufgenommen. Es zeigten sich durchweg unerwartet vorteilhafte Ergebnisse.

Eine weitere vorteilhafte Ausbildung besteht darin, dass die Riemenhöhe zwischen 4,0 und 5,2 mm beträgt. Keilrippenriemen mit dieser Riemenhöhe weisen einen guten Kompromiss zwischen der Resistenz gegen Riemenspaltung, Leistungsübertragungsfähigkeit und der Biegewechseldauerhaltbarkeit auf.

Eine weitere vorteilhafte Ausbildung besteht darin, dass die Rippentiefe zwischen 1,6 und 2,5 mm beträgt. Keilrippenriemen mit dieser Rippentiefe weisen einen guten Kompromiss zwischen der Resistenz gegen Leistungsübertragungsfähigkeit und der Biegewechseldauerhaltbarkeit auf.

Ein erfindungsgemäßer Keilrippenriemen lässt sich im so genannten Formverfahren hergestellen. Dazu wird die Decklagenmischungsplatte auf eine Trommel aufgelegt, die eine rotatorische Bewegung um ihre Mittelachse ausführt. Nachfolgend wird der Plattenstoß verquetscht, so dass die Trommel mit einem Rohgummimischungszylinder belegt ist. Anschließend werden ein oder mehrere Zugstränge parallel schneckenförmig auf die Decklage aufgespult. Danach wird die Unterbauplatte auf die Zugstrangebene gelegt. Anschließend kann der entstandenen Rohwickel auf der Außenseite auf dem Unterbau beschichtet werden. Elastische Textilbeschichtungen können von außen auf dem Unterbau aufgebracht werden. Der beschichtete Rohwickel wird in eine zylinderische Hohlform gestellt, die innen mit einem Negativrippenprofil versehen ist. Der Rohwickel wird während der Vulkanisation mittels einer innen eingesetzten zylindrischen Manschette mit Druck oder Heißdampf in die Rippen der Hohlform gepresst, und die Form auf die Vulkanisationstemperatur zwischen 150 bis 190°C gebracht. Die Rippen formen vollständig aus, die Gummimischungen werden vulkanisiert und die einzelnen Komponenten fest miteinander verbunden. Anschließend werden die Riemen mit der gewünschten Rippenzahl abgestochen.

Das Formverfahren hat im Vergleich zum Schleifverfahren zwei große Vorteile: Es entsteht sehr wenig Abfall, wodurch Ressourcen geschont werden, und es ermöglich, auf den Riemen spezielle geräuschdämmende Rippenbeschichtungen aufzubringen, was mit dem sonst üblichen Schleifverfahren nicht möglich ist.

Anhand eines Ausführungsbeispieles soll die Erfindung näher erläutert werden. Es zeigen
- Fig. 1: einen Ausschnitt eines erfindungsgemäßen Keilrippenriemens im Querschnitt,
- Fig. 2: ein Rippenprofil einer Rippe eines erfindungsgemäßen Keilrippenriemens im Detail

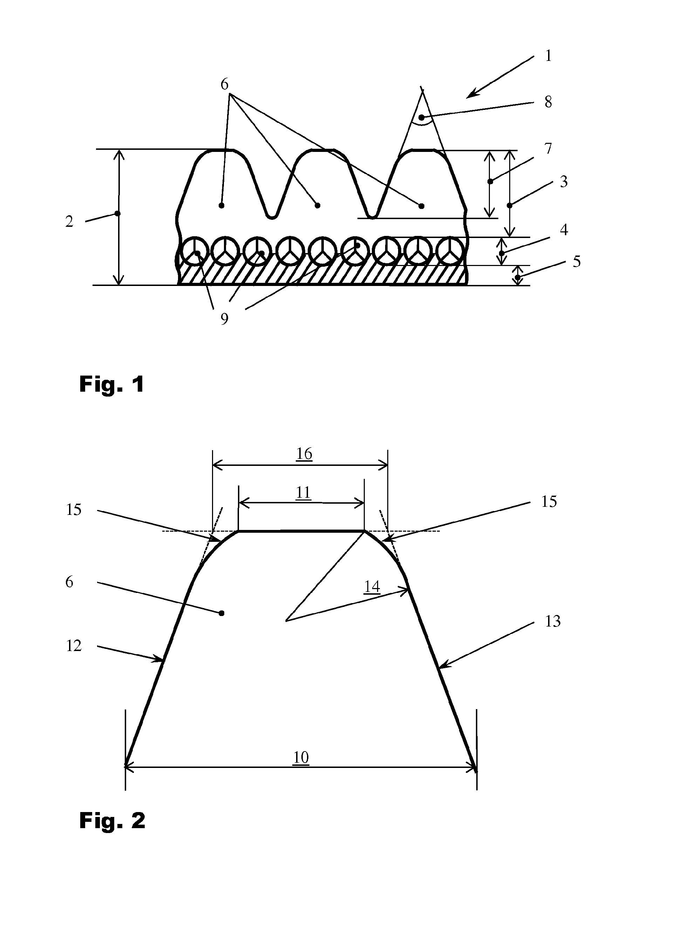

Die Fig. 1 zeigt einen Ausschnitt eines erfindungsgemäßen Keilrippenriemens 1 mit einer Riemenhöhe 2 bestehen aus seinem Unterbau 3, seiner Zugträgerlage 4 und seiner Decklage 5. Der Unterbau 3 des Keilrippenriemens 1 enthält die Rippen 6 mit der Rippentiefe 7 und dem Rippenwinkel 8 der Rippenflanken. In der Zugträgerlage 4 ist eine Vielzahl von Zugträgern 9 eingebettet, die in dem hier gezeigten Beispiel aus gezwirnten Polyestercorden bestehen.

Figur 2 zeigt im Detail ein Rippenprofil einer Rippe 6. Das Rippenprofil ist im Wesentlichen als symmetrisches Trapez/Trapezprofil mit einer langen Trapezgrundseite 10 und einer kürzeren Trapezkopfseite 11 ausgebildet. Das Trapezprofil weist Schenkel 12 und 13 auf, die an der Trapezkopfseite zum Trapez hin gebogenen ausgebildet ist, wobei der Radius 14 der Biegung 15 hier 1,2 mm beträgt.

Die Differenz der Breite der durch die Schnittpunkte einer gedachten Verlängerung der Trapezschenkel mit einer Tangente an den Trapezkopf definierten Trapezkopfseite 16 ohne Abrundung zu der Breite der Trapezkopfseite 11 mit Abrundung beträgt hier 0,7 mm. Die Breite der Trapezkopfseite 11, d.h. die so genannte Plateaubreite, beträgt hier 1,1 mm.

Die Rippenflanken 12, 13 und die Trapezkopfseite 11 des Keilrippenriemens 6 weisen einen Reibbeiwert auf, der gemessen als CoF-Wert nach SAE J2432 bei CoF = 1,3 liegt. Hierzu sind die Profilrippen mit einer hier nicht näher dargestellten Beschichtung in Form einer Textilauflage versehen sind, die ein Fasergemisch aus Polyamid, Aramid oder Polyester enthält.

### Bezugszeichenliste

### (Teil der Beschreibung)

- 1: Keihippenriemen
- 2: Riemenhöhe
- 3: Unterbaudicke
- 4: Zugträgerlage
- 5: Decklage
- 6: Rippe
- 7: Rippentiefe
- 8: Rippenwinkel
- 9: Zugträger
- 10: Trapezgrundseite
- 11: Trapezkopfseite mit Rundung
- 12: Schenkel
- 13: Schenkel
- 14: Radius
- 15: Biegung
- 16: Trapezkopfseite ohne Rundung

## Patentansprüche

1. Kraftübertragender Keilrippenriemen (1) aus Elastomermaterial mit eingebetteten Zugträgern (9), dessen Rippenprofil (6) im wesentlichen als symmetrisches Trapez mit einer langen Trapezgrundseite (10) und einer kürzeren Trapezkopfseite (11) ausgebildet ist, **dadurch gekennzeichnet, dass** das Trapez mit an der Trapezkopfseite zum Trapez hin gebogenen Schenkeln (12, 13) ausgebildet ist, wobei der Radius (14) der Biegung (15) größer als 0,8 mm ist und die Breite der Trapezkopfseite (11) zwischen 0,7 mm und 1,5 mm liegt.

2. Keilrippenriemen nach Anspruch 1, bei dem die Differenz der Breite der Trapezkopfseite (16) ohne Abrundung zur Breite der Trapezkopfseite (11) mit Abrundung mindestens 0,6 mm beträgt.

3. Keilrippenriemen nach Anspruch 1 oder 2, bei dem der Radius (14) der Biegung (15) mindestens 1,0 mm beträgt.

4. Keilrippenriemen einem der Ansprüche 1 bis 3, bei dem der Reibbeiwert, gemessen als CoF-Wert nach SAE J2432, zwischen CoF = 1,2 und CoF = 1,5 liegt.

5. Keilrippenriemen nach einem der Ansprüche 1 bis 4, bei dem die Profilrippen (6) mit einer Beschichtung in Form einer Textilauflage versehen sind, die Fasern aus Polyamid, Aramid oder Polyester enthält.

6. Keilrippenriemen nach Anspruch 5, bei dem die Textilauflage ein Baumwoll-Mischgestrick mit Fasern aus Polyamid, Aramid oder Polyester beinhaltet.

7. Keilrippenriemen nach einem der Ansprüche 1 bis 6, bei dem die Kautschukmischung unter der Beschichtung peroxidisch vernetzt wurde.

8. Keilrippenriemen nach einem der Ansprüche 1 bis 7, bei dem der Unterbau Ethylen-Propylen-Dien-Kautschuk, Ethylen-Propylen-Kautschuk, hydrierter Acrylnitril-Kautschuk oder Gemische daraus enthält.

9. Keilrippenriemen nach einem der Ansprüche 1 bis 8, bei dem die Riemenhöhe (2) zwischen 4,0 und 5,2 mm beträgt.

10. Keilrippenriemen nach einem der Ansprüche 1 bis 9, bei dem die Rippentiefe (7) zwischen 1,6 und 2,5 mm beträgt.

## Claims

1. Force-transmitting V-ribbed belt (1) made of elastomer material with embedded tension-member systems (9), where the rib profile (6) of the said belt is in essence designed as a symmetrical trapezium with a long basal side (10) of the trapezium and with a shorter upper side (11) of the trapezium, **characterized in that** the trapezium is designed with lateral sides (12, 13) which curve towards the trapezium at the upper side of the trapezium, where the radius (14) of the curvature (15) is greater than 0.8 mm and the width of the upper side (11) of the trapezium is from 0.7 mm to 1.5 mm.

2. V-ribbed belt according to Claim 1, where the difference between the width of the upper side (16) of the trapezium in the absence of rounding and the width of the upper side (11) of the trapezium with rounding is at least 0.6 mm.

3. V-ribbed belt according to Claim 1 or 2, where the radius (14) of the curvature (15) is at least 1.0 mm.

4. V-ribbed belt according to any of Claims 1 to 3, where the coefficient of friction, measured as CoF value in accordance with SAE J2432, is from 1.2 to 1.5.

5. V-ribbed belt according to any of Claims 1 to 4, where the profile ribs (6) have a coating in the form of a textile overlay which comprises fibres made of polyamide, aramid or polyester.

6. V-ribbed belt according to Claim 5, where the textile overlay includes a cotton-blend knitted fabric with fibres made of polyamide, aramid or polyester.

7. V-ribbed belt according to any of Claims 1 to 6, where the rubber mixture under the coating has been peroxidically crosslinked.

8. V-ribbed belt according to any of Claims 1 to 7, where the underside comprises ethylene-propylene-diene rubber, ethylene-propylene rubber, hydrogenated acrylonitrile rubber or a mixture thereof.

9. V-ribbed belt according to any of Claims 1 to 8, where the thickness (2) of the belt is from 4.0 to 5.2 mm.

10. V-ribbed belt according to any of Claims 1 to 9, where the depth (7) of the ribs is from 1.6 to 2.5 mm.

## Revendications

1. Courroie trapézoïdale à nervures (1) transmettant des forces en un matériau élastomère présentant des supports de traction (9) incorporés, dont le profil (6) de nervure est réalisé essentiellement sous forme de trapèze symétrique présentant une base inférieure (10) longue de trapèze et une base supérieure (11) plus courte de trapèze, **caractérisée en ce que** le trapèze est réalisé avec des traverses (12, 13) incurvées vers le trapèze au niveau de la base supérieure du trapèze, le rayon (14) de la courbure (15) étant supérieur à 0,8 mm et la largeur de la base supérieure (11) du trapèze étant située entre 0,7 mm et 1,5 mm.

2. Courroie trapézoïdale à nervures selon la revendication 1, pour laquelle la différence entre la largeur de la base supérieure (16) du trapèze sans arrondi et la largeur de la base supérieure (11) du trapèze avec arrondi est d'au moins 0,6 mm.

3. Courroie trapézoïdale à nervures selon la revendication 1 ou 2, pour laquelle le rayon (14) de la courbure (15) est d'au moins 1,0 mm.

4. Courroie trapézoïdale à nervures selon l'une quelconque des revendications 1 à 3, pour laquelle le coefficient de frottement, mesuré en tant que valeur CoF selon la norme SAE J2432, est situé entre CoF = 1,2 et CoF = 1,5.

5. Courroie trapézoïdale à nervures selon l'une quelconque des revendications 1 à 4, pour laquelle les nervures (6) du profil sont pourvues d'un revêtement sous forme d'un recouvrement textile, qui contient des fibres en polyamide, en aramide ou en polyester.

6. Courroie trapézoïdale à nervures selon la revendication 5, pour laquelle le recouvrement textile comporte un tricot mixte en coton avec des fibres en polyamide, en aramide ou en polyester.

7. Courroie trapézoïdale à nervures selon l'une quelconque des revendications 1 à 6, pour laquelle le mélange de caoutchouc sous le revêtement a été réticulé par voie peroxyde.

8. Courroie trapézoïdale à nervures selon l'une quelconque des revendications 1 à 7, pour laquelle la sous-structure contient un caoutchouc d'éthylène-propylène-diène, un caoutchouc d'éthylène-propylène, un caoutchouc hydrogéné d'acrylonitrile ou des mélanges de ceux-ci.

9. Courroie trapézoïdale à nervures selon l'une quelconque des revendications 1 à 8, pour laquelle la hauteur (2) de courroie est située entre 4,0 et 5,2 mm.

10. Courroie trapézoïdale à nervures selon l'une quelconque des revendications 1 à 9, pour laquelle la profondeur (7) des nervures est située entre 1,6 et 2,5 mm.
